# EUROPEAN PATENT APPLICATION

(11) **EP 4 708 657 A1**
(43) Date of publication of application: **11.03.2026**
(21) Application number: 25199289.7
(22) Date of filing: 01.09.2025
(51) Int. Cl.: H02M 1/44, H02M 7/48, H02M 7/5387, H02J 50/12, H02M 3/335, H02M 1/00, H02M 1/34, H02M 3/00

(54) **SYSTEMS AND METHODS FOR SLOPE CONTROL IN ELECTRICAL POWER SYSTEMS**

(30) Priority: 03.09.2024 US 202418822981
(71) Applicant: Avago Technologies International Sales Pte. Limited, Singapore 768923 (SG)
(72) Inventor: Walley, John Stuart, Ladera Ranch, CA, 92694 (US); Rutherford, Mark David, Wellington, CO, 80549 (US); Hayes, Eric Martin, Fort Collins, CO, 80526 (US)
(74) Representative: Grünecker Patent- und Rechtsanwälte PartG mbB

(57) **Abstract**

The subject technology is directed to an apparatus for controlling voltage transition rates in electronic circuits. In an embodiment, the apparatus comprises an inverter, which comprises a first node and a second node. The inverter is configured to generate a first signal characterized by a voltage transition rate. The apparatus further comprises a first capacitor coupled between the first node and the second node. The first capacitor is characterized by a first capacitance. The apparatus further comprises a controller coupled to the inverter and the first capacitor. The controller is configured to control the voltage transition rate by adjusting the first capacitance.

## Description

### BACKGROUND OF THE INVENTION

Slope control in electronic circuits facilitates the performance and efficiency of systems, particularly in applications involving high-frequency signals and power transmission. As modern electronic devices continue to advance, there is a growing demand for the precise management of signal characteristics, such as voltage transition rates. Some approaches rely on fixed capacitance or resistance values, which often fail to offer the flexibility and precision needed in dynamic operating environments. These approaches can lead to less efficient performance, increased electromagnetic interference (EMI), and reduced power transfer efficiency.

Various approaches for improving slope control in power transmission circuits have been explored, but they have proven to be insufficient. It is important to recognize the need for new and improved systems and methods for adaptive slope control in power transmission circuits.

### BRIEF DESCRIPTION OF THE DRAWINGS

A further understanding of the nature and advantages of particular embodiments may be realized by reference to the remaining portions of the specification and the drawings, in which like reference numerals are used to refer to similar components. In some instances, a sub-label is associated with a reference numeral to denote one of multiple similar components. When reference is made to a reference numeral without specification to an existing sub-label, it is intended to refer to all such multiple similar components.
Figure 1 is a circuit diagram illustrating a circuit with adaptive slope control, in accordance with various embodiments of the subject technology.
Figure 2 is a circuit diagram illustrating a circuit with adaptive slope control, in accordance with various embodiments of the subject technology.
Figure 3 is a circuit diagram illustrating a circuit with adaptive slope control, in accordance with various embodiments of the subject technology.

### DETAILED DESCRIPTION OF THE INVENTION

The subject technology is directed to an apparatus for controlling voltage transition rates in electronic circuits. In an embodiment, the apparatus comprises an inverter, which comprises a first node and a second node. The inverter is configured to generate a first signal characterized by a voltage transition rate. The apparatus further comprises a first capacitor coupled between the first node and the second node. The first capacitor is characterized by a first capacitance. The apparatus further comprises a controller coupled to the inverter and the first capacitor. The controller is configured to control the voltage transition rate by adjusting the first capacitance. In this configuration, the first capacitor is coupled between the nodes without a direct connection to a common reference potential (e.g., ground). This approach reduces the number of capacitors required and lowers the necessary capacitance values, thereby addressing component mismatch issues that can contribute to electromagnetic interference (EMI).

One general aspect of the subject technology provides an apparatus, which comprises an inverter comprising a first node and a second node, the inverter being configured to generate a first signal characterized by a voltage transition rate. The apparatus further comprises a first capacitor coupled to the first node and the second node, the first capacitor being characterized by a first capacitance. The apparatus further comprises a controller coupled to the inverter and the first capacitor, the controller being configured to control the voltage transition rate by adjusting the first capacitance. The apparatus further comprises a first transistor coupled to the first capacitor and the controller.

Implementations may include one or more of the following features. The first transistor and the first capacitor are configured in series between the first node and the second node. The first transistor is characterized by a first resistance, and the controller is configured to adjust the first capacitance by adjusting the first resistance of the first transistor. The first transistor comprises a field effect transistor (FET). The controller further comprises a timing circuit configured to measure a duration of voltage transitions at the first node and the second node. The controller further comprises a comparator coupled to the timing circuit, and the comparator is configured to compare the duration of voltage transitions with a predefined threshold. The first signal comprises an alternating current (AC) signal. The controller is further configured to adjust the first capacitance by applying pulse width modulation (PWM) to the first capacitor. The inverter comprises a second transistor configured to adjust the first capacitance.

According to another embodiment, the subject technology provides an apparatus, which comprises a power supply. The apparatus further comprises an inverter coupled to the power supply, the inverter comprising a first node and a second node, the inverter being configured to generate a first signal characterized by a voltage transition rate. The apparatus further comprises a first capacitor coupled between the first node and the second node, the first capacitor being characterized by a first capacitance. The apparatus further comprises a controller coupled to the inverter and the first capacitor, the controller being configured to control the voltage transition rate by adjusting the first capacitance. The apparatus further comprises a first transistor coupled to the first capacitor and the controller.

Implementations may include one or more of the following features. The first node is coupled to a drain terminal of the first transistor, and the second node is coupled to a source terminal of the first transistor. The first transistor is characterized by a first resistance, and the controller is configured to adjust the first capacitance by adjusting the first resistance of the first transistor. The first transistor comprises a field effect transistor (FET). The first signal comprises an alternating current (AC) signal. The apparatus further comprises a second capacitor configured in parallel relative to the first capacitor between the first node and the second node. The controller is further configured to adjust the first capacitance by applying pulse width modulation (PWM) to the first capacitor.

According to yet another embodiment, the subject technology provides an apparatus, which comprises an inverter comprising a first node and a second node, the inverter being configured to generate a first signal characterized by a voltage transition rate. The apparatus further comprises a first capacitor coupled between the first node and the second node, the first capacitor being characterized by a first capacitance, the first capacitance being associated with the voltage transition rate. The apparatus further comprises a controller coupled to the inverter and the first capacitor, the controller being configured to control the voltage transition rate by adjusting the first capacitance. In various embodiments, the apparatus further comprises a first transistor coupled between the first node and the second node. The controller further comprises a timing circuit configured to measure a duration of voltage transitions at the first node and the second node.

The following description is presented to enable one of ordinary skill in the art to make and use the invention and to incorporate it in the context of particular applications. Various modifications, as well as a variety of uses in different applications will be readily apparent to those skilled in the art, and the general principles defined herein may be applied to a wide range of embodiments. Thus, the subject technology is not intended to be limited to the embodiments presented but is to be accorded the widest scope consistent with the principles and novel features disclosed herein.

In the following detailed description, numerous specific details are set forth in order to provide a more thorough understanding of the subject technology. However, it will be apparent to one skilled in the art that the subject technology may be practiced without necessarily being limited to these specific details. In other instances, well-known structures and devices are shown in block diagram form, rather than in detail, in order to avoid obscuring the subject technology.

The reader's attention is directed to all papers and documents which are filed concurrently with this specification and which are open to public inspection with this specification, and the contents of all such papers and documents are incorporated herein by reference. All the features disclosed in this specification, (including any accompanying claims, abstract, and drawings) may be replaced by alternative features serving the same, equivalent, or similar purpose, unless expressly stated otherwise. Thus, unless expressly stated otherwise, each feature disclosed is one example only of a generic series of equivalent or similar features.

Furthermore, any element in a claim that does not explicitly state "means for" performing a specified function, or "step for" performing a specific function, is not to be interpreted as a "means" or "step" clause as specified in 35 U.S.C. Section 112, Paragraph 6. In particular, the use of "step of" or "act of" in the Claims herein is not intended to invoke the provisions of 35 U.S.C. 112, Paragraph 6.

When an element is referred to herein as being "connected" or "coupled" to another element, it is to be understood that the elements can be directly connected to the other element, or have intervening elements present between the elements. In contrast, when an element is referred to as being "directly connected" or "directly coupled" to another element, it should be understood that no intervening elements are present in the "direct" connection between the elements. However, the existence of a direct connection does not exclude other connections, in which intervening elements may be present.

When an element is referred to herein as being "disposed" in some manner relative to another element (e.g., disposed on, disposed between, disposed under, disposed adjacent to, or disposed in some other relative manner), it is to be understood that the elements can be directly disposed relative to the other element (e.g., disposed directly on another element), or have intervening elements present between the elements. In contrast, when an element is referred to as being "disposed directly" relative to another element, it should be understood that no intervening elements are present in the "direct" example. However, the existence of a direct disposition does not exclude other examples in which intervening elements may be present.

Moreover, the terms left, right, front, back, top, bottom, forward, reverse, clockwise and counterclockwise are used for purposes of explanation only and are not limited to any fixed direction or orientation. Rather, they are used merely to indicate relative locations and/or directions between various parts of an object and/or components.

Furthermore, the methods and processes described herein may be described in a particular order for ease of description. However, it should be understood that, unless the context dictates otherwise, intervening processes may take place before and/or after any portion of the described process, and further various procedures may be reordered, added, and/or omitted in accordance with various embodiments.

Unless otherwise indicated, all numbers used herein to express quantities, dimensions, and so forth should be understood as being modified in all instances by the term "about." In this application, the use of the singular includes the plural unless specifically stated otherwise, and use of the terms "and" and "or" means "and/or" unless otherwise indicated. Moreover, the use of the terms "including" and "having," as well as other forms, such as "includes," "included," "has," "have," and "had," should be considered non-exclusive. Also, terms such as "element" or "component" encompass both elements and components comprising one unit and elements and components that comprise more than one unit, unless specifically stated otherwise.

As used herein, the phrase "at least one of" preceding a series of items, with the term "and" or "or" to separate any of the items, modifies the list as a whole, rather than each member of the list (i.e., each item). The phrase "at least one of" does not require selection of at least one of each item listed; rather, the phrase allows a meaning that includes at least one of any one of the items, and/or at least one of any combination of the items. By way of example, the phrases "at least one of A, B, and C" or "at least one of A, B, or C" each refer to only A, only B, or only C; and/or any combination of A, B, and C. In instances where it is intended that a selection be of "at least one of each of A, B, and C," or alternatively, "at least one of A, at least one of B, and at least one of C," it is expressly described as such.

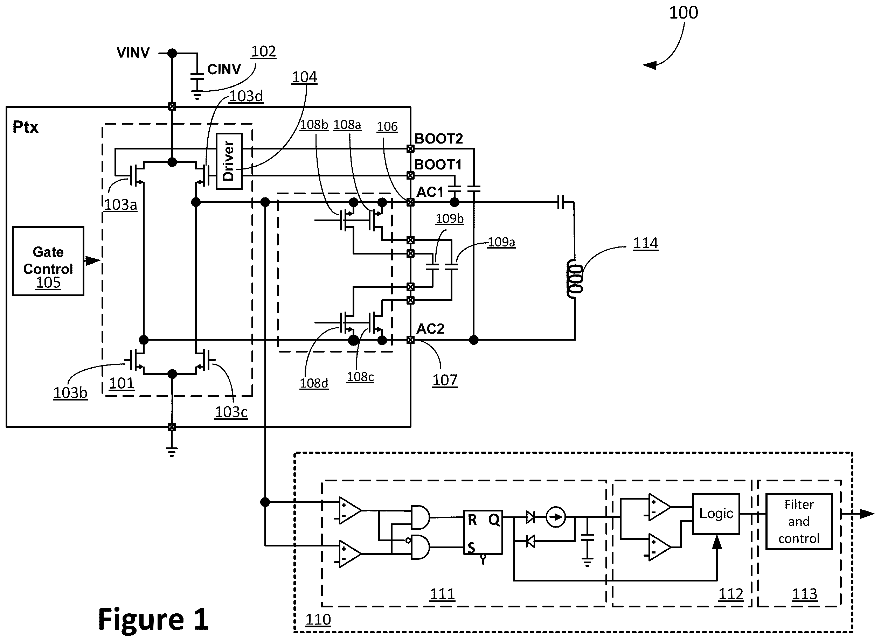

Figure 1 is a circuit diagram illustrating circuit 100, in accordance with various embodiments of the subject technology. This diagram merely provides an example, which should not unduly limit the scope of the claims. One of ordinary skill in the art would recognize many variations, alternatives, and modifications.

Circuit 100 may be implemented in various power transmission applications, such as wireless power transfer (WPT) systems, power management systems, signal processing, and/or the like. For instance, in a WPT system, circuit 100 may include a transmitter circuit, which is configured to generate and transmit an alternating current (AC) signal to a corresponding receiver circuit through a resonant coil system, enabling wireless power transmission over a distance. The transmitter circuit may modulate the power transfer by adjusting the characteristics of the AC signal based on varying load conditions at the receiver end, thereby optimizing efficiency and reducing EMI. In other examples, circuit 100 may include a receiver circuit configured to receive the wireless AC power and convert it back to DC for powering devices such as mobile phones, laptops, or industrial equipment. In some implementations, circuit 100 may be incorporated into systems requiring precise control of signal characteristics under varying load conditions, such as adaptive power management systems or dynamic signal processing circuits.

In various implementations, circuit 100 includes inverter 101. The term "inverter" may refer to a circuit that converts direct current (DC) from a power supply into alternating current (AC). Examples of inverters may include, without limitation, half-bridge inverters, full-bridge inverters, resonant inverters, pulse-width modulated (PWM) inverters, and/or the like. Inverter 101 may include one or more transistors 103a, 103b, 103c, 103d. The term "transistor" may refer to a semiconductor component that controls voltage or current flow in electronic signals. Examples of transistors may include, without limitation, field-effect transistors (FETs), bipolar junction transistors (BJTs), metal-oxide-semiconductor FETs (MOSFETs), insulated-gate bipolar transistors (IGBTs), phototransistors, and/or the like. These transistors are configured to control the flow of current within inverter 101, allowing it to effectively convert DC input into an AC output. Each transistor in inverter 101 operates as a switch, turning on and off in precise sequences to generate the desired AC waveform.

In various examples, the operation of transistors 103a-103d is managed by driver 104 and gate control circuit 105. For instance, the term "gate control" or "gate control circuit" may refer to a part of an electronic circuit responsible for generating the signals that control the timing, duration, and/or sequence of switching actions of power switches such as transistors. For instance, gate control circuit 105 may be coupled to each of the transistors 103a-103d, providing control signals to the gate terminals of these transistors. Examples of gate control circuits may include, without limitation, microcontrollers, digital signal processors (DSPs), field-programmable gate arrays (FPGAs), and/or the like. The term "driver" may refer to a circuit that amplifies control signals to the necessary voltage and current levels required to operate power switches, such as transistors, within an electronic circuit. Examples of drivers may include, without limitation, MOSFET drivers, IGBT drivers, and/or the like. For instance, driver 104 may be coupled to the gate terminals of transistors 103a-103d, ensuring that each transistor receives the necessary voltage and current to transition between its on and off states.

In some implementations, gate control circuit 105 generates the control signals that dictate the switching behavior of the transistors 103a-103d. For instance, the control signals may be in the form of PWM signals, which regulate the timing, duration, and frequency of the transistors' switching actions. Gate control circuit 105 is provided so that these signals are synchronized across the different transistors, preventing timing conflicts and ensuring that the inverter operates efficiently and with minimal signal distortion. In some cases, driver 104 amplifies the control signals generated by gate control circuit 105 to the appropriate levels required to operate transistors 103a-103d effectively. This amplification helps the transistors to receive sufficient voltage and current at their gate terminals, enabling them to switch on and off rapidly and reliably.

In some embodiments, inverter 101 may be configured to generate a first signal characterized by a voltage transition rate. For instance, the first signal may include an AC signal that oscillates between positive and negative voltage levels, providing the alternating current for various applications. The term "voltage transition rate," also referred to as "slope," refers to the rate at which the voltage changes from one level to another during each cycle of the AC signal. In a WPT system, for example, controlling the slope is beneficial for managing EMI and optimizing the efficiency of power transmission. For instance, a rapid voltage transition may cause excessive EMI, leading to signal distortion and reduced efficiency. Conversely, a slow transition may result in energy losses and decreased power transfer efficiency. Therefore, slope control, or the ability to adjust the voltage transition rate, enables the system to maintain a balance between minimizing EMI and maximizing power transfer efficiency.

In some implementations, inverter 101 includes first node 106 (e.g., denoted as AC1) and second node 107 (e.g., denoted as AC2). The term "node" may refer to a junction or connection point within an electrical circuit where circuit elements are interconnected. For instance, first node 106 and second node 107 may represent connection points where the voltage transitions occur during the operation of inverter 101. These nodes may be associated with the output of inverter 101, where the AC signal is generated and voltage transitions occur. In some cases, precise control of the voltage transition rate at first node 106 and second node 107 is beneficial for maintaining the desired performance of the WPT system. For example, by adjusting the capacitance or resistance values associated with these nodes, the system can control the slope of the voltage signal to respond to varying load conditions or power supply fluctuations.

Power supply 102 may be coupled to inverter 101, providing an input voltage, denoted as VINV. The term "power supply" may refer to any source of electrical energy that provides the required voltage and current for a circuit to operate. Examples of power supplies may include, without limitation, batteries, power adapters, photovoltaic cells, DC power supplies, AC power supplies, and/or the like. In various examples, power supply 102 provides a stable DC voltage to inverter 101 for generating the AC signal with controlled characteristics.

According to some embodiments, circuit 100 further includes one or more capacitors (e.g., capacitors 109a and 109b). For instance, circuit 100 may include a first capacitor characterized by a first capacitance. The term "capacitor" may refer to an electronic component that stores and releases electrical energy in the form of an electric field. Examples of capacitors may include, without limitation, ceramic capacitors, electrolytic capacitors, film capacitors, and/or the like. The term "capacitance" refers to the ability of a capacitor to store an electrical charge. Capacitance may be measured in farads (F) and can be determined using various methods, such as measuring the charge stored on the capacitor at a known voltage or using an LCR meter to directly measure the capacitance value.

For example, capacitor 109a is coupled between first node 106 and second node 107. Capacitor 109b may be configured in parallel with capacitor 109a between first node 106 and second node 107. Capacitors 109a and 109b are configured to influence the voltage transition rate, or slope, of the AC signal generated by inverter 101. By adjusting the capacitance values of these capacitors, the system can dynamically control the rate at which the voltage at first node 106 and second node 107 changes, thereby optimizing the performance of circuit 100 under different operating conditions. For example, in response to varying load conditions or power supply fluctuations, the capacitance values can be adjusted to smooth out the voltage transitions, reducing EMI and improving overall power transfer efficiency.

In various implementations, capacitors 109a and 109b are configured in a floating configuration. In other words, they are not directly connected to a fixed reference point (e.g., ground). Instead, these capacitors are coupled between first node 106 and second node 107, forming part of the AC signal path generated by inverter 101. One of the benefits of the floating configuration is the reduction in the number of capacitors required to achieve the desired voltage transition rate, or slope. By placing the capacitors in a floating configuration, the system can effectively reduce the number of capacitors needed compared to a grounded configuration, where each capacitor is coupled to a fixed reference point such as ground.

The floating configuration also minimizes issues related to component mismatches, which can be a significant source of EMI. In a grounded configuration where capacitors are referenced to ground, even slight differences in capacitance values can lead to imbalances, resulting in unwanted noise and signal distortion. Decoupling the capacitors from a fixed reference potential balances capacitors 109a and 109b between the nodes, reducing the potential for mismatch and improving overall signal integrity. This balanced arrangement not only minimizes EMI but also enhances the efficiency of power transmission by ensuring that the AC signal transitions smoothly and consistently between the desired voltage levels.

In various implementations, circuit 100 includes one or more transistors (e.g., transistors 108a-108d), which may be coupled to the capacitors (e.g., capacitors 109a and/or 109b) and controller 110. For instance, first node 106 is coupled to a drain terminal of transistor 108a, and second node 107 is coupled to a source terminal of transistor 108a. These transistors are configured to adjust the effective capacitance between first node 106 and second node 107 by selectively switching capacitors 109a and 109b in and out of the circuit. For instance, each transistor may be characterized by a resistance value, and controller 110 is configured to adjust the capacitance of capacitors 109a and/or 109b by adjusting the resistance values of one or more transistors (e.g., transistors 108a-108d). In some embodiments, each pair of transistors (e.g., 108a and 108b, 108c and 108d) is associated with one of the capacitors (e.g., 109a or 109b). For instance, transistors 108a and 108c may be coupled in series with capacitor 109a. In some cases, capacitor 109b is configured in parallel relative to capacitor 109a between first node 106 and second node 107.

In operation, when transistors 108a and 108c are turned on, capacitor 109a is effectively connected between first node 106 and second node 107, thereby increasing the total capacitance between these nodes. Conversely, when transistors 108a and 108c are turned off, capacitor 109a is disconnected from the circuit, reducing the capacitance. The same operational principle applies to transistors 108b and 108d with capacitor 109b. This selective switching mechanism enables the circuit to continuously adjust the effective capacitance between first node 106 and second node 107 in real time, based on the current operating conditions and requirements. This adaptability is beneficial in applications like WPT systems, where the load conditions can change rapidly, necessitating continuous adjustments to maintain optimal performance.

According to some embodiments, circuit 100 further includes controller 110, which is responsible for managing and regulating the slope control of the first signal generated by inverter 101. Slope control, or the adjustment of the voltage transition rate between the high and low states of the first signal, is an important aspect of maintaining the circuit's performance, particularly in minimizing EMI and optimizing power transfer efficiency. The term "controller" may refer to a component or system that regulates the behavior of other components within an electronic circuit based on predefined parameters or real-time feedback. For instance, controller 110 may be configured to control the voltage transition rate by adjusting the capacitance of one or more capacitors (e.g., capacitors 109a and 109b). In various examples, controller 110 continuously monitors the voltage levels at first node 106 and second node 107, as well as the timing and duration of voltage transitions. By analyzing this data in real time, controller 110 determines whether adjustments are necessary to maintain the voltage transition rate within a desired range.

In various implementations, controller 110 includes timing circuit 111. The term "timing circuit" may refer to an electronic component or system that is responsible for measuring the duration of specific events or intervals within an electrical circuit. Timing circuit 111 may be configured to measure a duration of voltage transitions at first node 106 and second node 107. For example, timing circuit 111 may be coupled to first node 106 and second node 107, allowing it to monitor the voltage transitions at these points. As the voltage oscillates between high and low states during the operation of inverter 101, timing circuit 111 measures the time taken for these transitions to occur (e.g., rise time).

Timing circuit 111 may include various components such as comparators, logic gates, flip-flops, current sources, diodes, and capacitors. For instance, the comparators may be configured to detect when the voltage at the nodes reaches specific threshold levels, triggering the timing process. The logic gates process these signals, ensuring that timing only occurs under the correct conditions. The flip-flop captures and holds the timing information, providing a stable output that represents the duration of the voltage transition. In some cases, timing circuit 111 may incorporate a current source or a capacitor to convert the timing information into a measurable voltage, which can be used to determine the slope or voltage transition rate of the first signal.

In some embodiments, comparator 112 is coupled to timing circuit 111. The term "comparator" may refer to an electronic component that compares two voltages or currents and outputs a signal based on the comparison. Examples of comparators may include, without limitation, operational amplifier-based comparators, window comparators, voltage comparators, current comparators, and/or the like. Comparator 112 may be configured to compare the measured duration of voltage transitions against one or more predefined thresholds. These thresholds, which may be programmable or set based on system requirements, define the acceptable range for the slope of the voltage transitions.

In various implementations, timing circuit 111 may convert the measured duration of the voltage transition at first node 106 and second node 107 into a corresponding voltage level. Comparator 112 then receives this voltage and compares it to a target window defined by the first threshold (e.g., Thresh1) and the second threshold (e.g., Thresh2). These thresholds are set based on the desired slope of the voltage transition or the current supply voltage (e.g., VINV) provided by power supply 102. Thresh1 may represent the lower boundary of the acceptable voltage transition rate, and Thresh2 may represent the upper boundary.

In various examples, comparator 112 applies logic to evaluate whether the measured voltage falls within this target window. If the voltage is within the range defined by Thresh1 and Thresh2, the slope of the voltage transition is considered acceptable. If the voltage falls outside this range, the comparator determines whether the slope is too steep or too shallow. For instance, if the measured voltage exceeds Thresh2, this indicates that the slope is too steep, which could lead to increased EMI and potential signal distortion. Conversely, if the measured voltage is below Thresh1, this indicates that the slope is too shallow, which could result in inefficiencies in power transfer and increased energy losses.

Based on this comparison, comparator 112 may generate a correction signal that reflects whether the slope of the voltage transition needs to be adjusted. The correction signal is then passed to filter circuit 113, which may be configured to refine the signal by smoothing out any fluctuations or noise. The term "filter circuit" may refer to an electronic circuit that processes signals by allowing certain frequencies to pass while attenuating others. Examples of filter circuits may include, without limitation, low-pass filters, high-pass filters, band-pass filters, and/or the like.

In various examples, filter circuit 113 may analyze multiple slope samples over time to average out any irregularities in the comparator's output. This filtering process is beneficial for ensuring that the correction signal accurately reflects the circuit's actual performance rather than responding to momentary spikes or noise. The filtered signal provides a stable and reliable basis for the subsequent adjustments made by controller 110.

Based on the filtered data from filter circuit 113, controller 110 determines whether to increase or decrease the slope of the voltage transition. This adjustment may be made by modifying several circuit parameters. For instance, controller 110 may adjust the floating capacitance between first node 106 and second node 107 by selectively engaging or disengaging capacitors (e.g., 109a and 109b) using transistors (e.g., 108a-108d). In some examples, controller 110 may modulate the gate drive of the transistors (e.g., 108a-108d), altering the voltage and current applied to the gates to control the switching speed and, consequently, the slope of the transitions. In some cases, controller 110 may adjust the resistance or current through the transistors (e.g., 108a-108d) to fine-tune the slope.

In various implementations, circuit 100 includes coil 114. The term "coil" may refer to an inductive component used in electronic circuits to store energy in a magnetic field when electrical current flows through it. Examples of coils may include, without limitation, air-core coils, ferrite-core coils, laminated iron-core coils, and/or the like. In WPT systems, coil 114 may be used to generate and receive electromagnetic fields that facilitate the transfer of energy between the transmitter and receiver. In some examples, coil 114 is coupled to the output of inverter 101 (e.g., first node 106 and/or second node 107), where the AC signal generated by the inverter is applied. The AC signal causes coil 114 to produce an alternating magnetic field around it. This magnetic field may interact with a corresponding coil in a receiver circuit, enabling the wireless transfer of power. The efficiency of this power transfer depends on the precise control of the AC signal's characteristics, such as its frequency, amplitude, voltage transition rate, and/or the like.

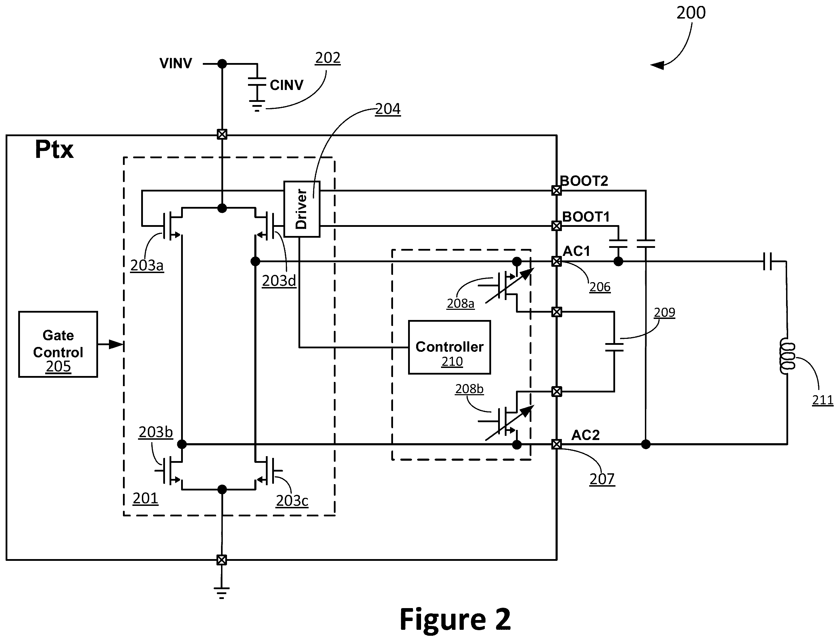

Figure 2 is a circuit diagram illustrating circuit 200, in accordance with various embodiments of the subject technology. This diagram merely provides an example, which should not unduly limit the scope of the claims. One of ordinary skill in the art would recognize many variations, alternatives, and modifications.

Circuit 200 may be implemented in a variety of power transmission applications, such as wireless power transfer (WPT) systems, power management systems, signal processing, and/or the like. For instance, in a WPT system, circuit 200 may include a transmitter circuit, which is configured to generate and transmit an AC signal to a corresponding receiver circuit through a resonant coil system, enabling wireless power transmission over a distance. In various implementations, circuit 200 includes at least one of inverter 201, power supply 202, transistor 208a, transistor 208b, capacitor 209, controller 210, coil 211, and/or the like.

In some implementations, inverter 201 may include one or more transistors 203a, 203b, 203c, 203d. These transistors are configured to control the flow of current within inverter 201, allowing it to effectively convert DC input into an AC output. In some examples, the operation of transistors 203a-203d is managed by driver 204 and gate control circuit 205. Gate control circuit 205 may be coupled to each of the transistors 203a-203d, providing control signals to the gate terminals of these transistors. Driver 204 may be coupled to the gate terminals of transistors 203a-203d, ensuring that each transistor receives the necessary voltage and current to transition between its on and off states.

In some embodiments, inverter 201 generates a first signal that is characterized by a voltage transition rate. For instance, the first signal includes an AC signal. The AC signal is then transmitted to a load or through a resonant coil system (e.g., coil 211), enabling wireless power transfer. The efficiency of power transfer depends on the ability to precisely control the characteristics of the AC signal, such as frequency, amplitude, and slope. By adjusting these characteristics, the system can optimize performance under varying load conditions and minimize EMI.

In some implementations, inverter 201 includes first node 206 (e.g., denoted as AC1) and second node 207 (e.g., denoted as AC2). For instance, first node 206 and second node 207 may represent connection points where the voltage transitions occur during the operation of inverter 201. These nodes may be associated with the output of inverter 201, where the AC signal is generated and voltage transitions occur. In some cases, precise control of the voltage transition rate at first node 206 and second node 207 is beneficial for maintaining the desired performance of the WPT system. For example, by adjusting the capacitance or resistance values associated with these nodes, the system can dynamically control the slope of the voltage signal to respond to varying load conditions or power supply fluctuations.

In various implementations, circuit 200 further includes controller 210, which may be configured to manage and regulate the slope control of the first signal generated by inverter 201. Slope control, or the adjustment of the voltage transition rate between the high and low states of the first signal, is important for maintaining optimal performance, particularly in minimizing EMI and optimizing power transfer efficiency. In some examples, controller 210 continuously monitors the voltage transitions at first node 206 and second node 207, as well as the timing and duration of voltage transitions. By analyzing this data in real time, controller 210 determines whether adjustments are necessary to maintain the voltage transition rate within a desired range.

In some embodiments, controller 210 is coupled to transistors 208a and 208b. Capacitor 209 may be coupled to transistors 208a and 208b between first node 206 and second node 207. These transistors and the capacitor work in conjunction to adjust the effective capacitance between first node 206 and second node 207, thereby fine-tuning the slope of the AC signal. For instance, transistors 208a and 208b include FETs configured to drive capacitor 209. By adjusting the resistance or current through these FETs, controller 210 can modulate the slope of the voltage transition. This configuration reduces the need for additional capacitors in circuit 200, streamlining the design and improving overall efficiency.

In some implementations, controller 210 may be configured to adjust the capacitance of capacitor 209 by applying pulse-width modulation (PWM) to capacitor 209. The term "pulse width modulation" may refer to a technique used to control the amount of power delivered to an electronic component by varying the width of the pulses in a pulse train. PWM can be used to simulate a variable analog signal by rapidly switching between on and off states, where the ratio of on-time to off-time (e.g., duty cycle) determines the effective power delivered to the component. Controller 210 may employ PWM to modulate a single capacitor (e.g., capacitor 209) to achieve an equivalent amount of capacitance dynamically. For example, by rapidly switching the connection of capacitor 209 in and out of the circuit at a specific frequency, PWM can effectively vary the apparent capacitance seen by the circuit, allowing for dynamic adjustment without needing multiple physical capacitors. The use of PWM modulation allows for fine adjustments to the capacitance, providing flexibility in slope control under varying operating conditions. By adjusting the resistance, current, and/or capacitance within the circuit, controller 210 ensures that circuit 200 maintains optimal performance, especially in applications where precise slope control is beneficial to minimizing EMI and enhancing power transfer efficiency.

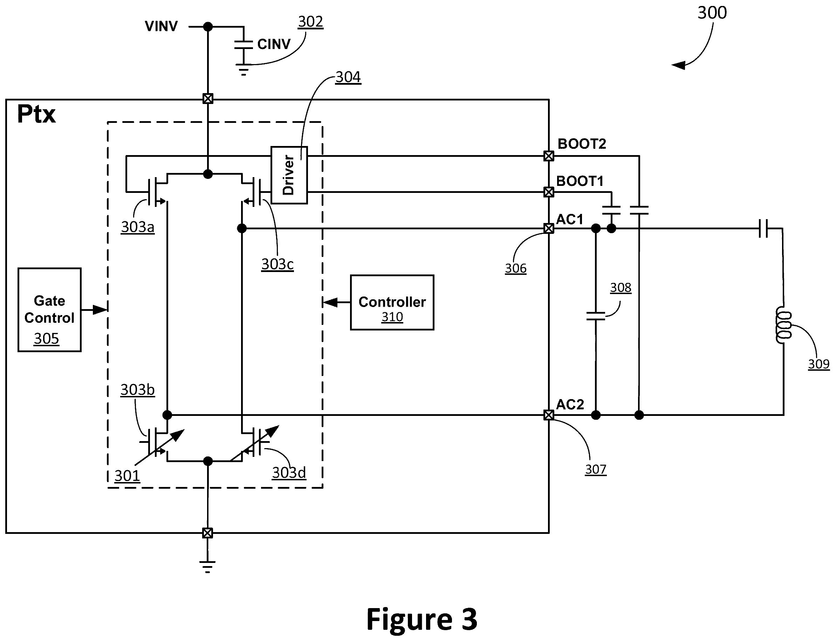

Figure 3 is a circuit diagram illustrating circuit 300, in accordance with various embodiments of the subject technology. This diagram merely provides an example, which should not unduly limit the scope of the claims. One of ordinary skill in the art would recognize many variations, alternatives, and modifications.

Circuit 300 may be implemented in a variety of power transmission applications, such as WPT systems, power management systems, signal processing, and/or the like. For instance, in a WPT system, circuit 300 may include a transmitter circuit, which is configured to generate and transmit an AC signal to a corresponding receiver circuit through a resonant coil system, enabling wireless power transmission over a distance. In various implementations, circuit 300 includes at least one of inverter 301, power supply 302, driver 304, gate control circuit 305, capacitor 308, coil 309, controller 310, and/or the like.

In some embodiments, inverter 301 generates a first signal that is characterized by a voltage transition rate. For instance, the first signal includes an AC signal. The AC signal is then transmitted to a load or through a resonant coil system (e.g., coil 309), enabling wireless power transfer. The efficiency of power transfer depends on the ability to precisely control the characteristics of the AC signal, such as frequency, amplitude, and slope. By adjusting these characteristics, the system can optimize performance under varying load conditions and minimize EMI.

In some implementations, inverter 301 includes first node 306 (e.g., denoted as AC1) and second node 307 (e.g., denoted as AC2). For instance, first node 306 and second node 307 may represent connection points where the voltage transitions occur during the operation of inverter 301. These nodes may be associated with the output of inverter 301, where the AC signal is generated and voltage transitions occur. In some cases, precise control of the voltage transition rate at first node 306 and second node 307 is beneficial for maintaining the desired performance of the WPT system. For example, by adjusting the capacitance or resistance values associated with these nodes, the system can dynamically control the slope of the voltage signal to respond to varying load conditions or power supply fluctuations.

In some implementations, inverter 301 may include one or more transistors 303a, 303b, 303c, 303d. For instance, these transistors, which may include one or more FETs, are configured to provide adjustable current or resistance to control the slope of the AC signal. Instead of employing an external controller (e.g., controller 110 of Figure 1), the slope is controlled by adjusting the resistance or current of the FETs within inverter 301. For instance, during the soft-switching region-a phase where the transistors transition between states-the resistance or current of these FETs may be modulated to fine-tune the slope of the voltage transition. During the active power region-when the transistors are fully on or off-the FETs may operate with either the lowest possible resistance or the highest possible resistance, depending on the desired outcome. This configuration enables the system to achieve a more linear slope, which can be beneficial for reducing EMI and improving overall signal quality.

While the above is a full description of the specific embodiments, various modifications, alternative constructions and equivalents may be used. Therefore, the above description and illustrations should not be taken as limiting the scope of the subject technology which is defined by the appended claims.

## Claims

1. An apparatus comprising:
an inverter comprising a first node and a second node, the inverter being configured to generate a first signal **characterized by** a voltage transition rate;
a first capacitor coupled to the first node and the second node, the first capacitor being **characterized by** a first capacitance;
a controller coupled to the inverter and the first capacitor, the controller being configured to control the voltage transition rate by adjusting the first capacitance; and
a first transistor coupled to the first capacitor and the controller.

2. The apparatus of claim 1, wherein the first transistor and the first capacitor are configured in series between the first node and the second node.

3. The apparatus of claim 1 or 2, wherein the first transistor is **characterized by** a first resistance, and the controller is configured to adjust the first capacitance by adjusting the first resistance of the first transistor.

4. The apparatus of any preceding claim, wherein the controller further comprises a timing circuit configured to measure a duration of voltage transitions at the first node and the second node,
in particular, wherein the controller further comprises a comparator coupled to the timing circuit, and the comparator is configured to compare the duration of voltage transitions with a predefined threshold.

5. The apparatus of any preceding claim, wherein the inverter comprises a second transistor configured to adjust the first capacitance.

6. An apparatus comprising:
a power supply;
an inverter coupled to the power supply, the inverter comprising a first node and a second node, the inverter being configured to generate a first signal **characterized by** a voltage transition rate;
a first capacitor coupled between the first node and the second node, the first capacitor being **characterized by** a first capacitance;
a controller coupled to the inverter and the first capacitor, the controller being configured to control the voltage transition rate by adjusting the first capacitance; and
a first transistor coupled to the first capacitor and the controller.

7. The apparatus of claim 6, wherein the first node is coupled to a drain terminal of the first transistor, and the second node is coupled to a source terminal of the first transistor.

8. The apparatus of claim 6 or 7, wherein the first transistor is **characterized by** a first resistance, and the controller is configured to adjust the first capacitance by adjusting the first resistance of the first transistor.

9. The apparatus of claim any of claims 6 to 8, further comprising a second capacitor configured in parallel relative to the first capacitor between the first node and the second node.

10. The apparatus of any preceding claim, wherein the first transistor comprises a field effect transistor (FET).

11. The apparatus of any preceding claim, wherein the first signal comprises an alternating current (AC) signal.

12. The apparatus of any preceding claim, wherein the controller is further configured to adjust the first capacitance by applying pulse width modulation (PWM) to the first capacitor.

13. An apparatus comprising:
an inverter comprising a first node and a second node, the inverter being configured to generate a first signal **characterized by** a voltage transition rate;
a first capacitor coupled between the first node and the second node, the first capacitor being **characterized by** a first capacitance, the first capacitance being associated with the voltage transition rate; and
a controller coupled to the inverter and the first capacitor, the controller being configured to control the voltage transition rate by adjusting the first capacitance.

14. The apparatus of claim 13, further comprising a first transistor coupled between the first node and the second node.

15. The apparatus of claim 13 or 14, wherein the controller further comprises a timing circuit configured to measure a duration of voltage transitions at the first node and the second node,
in particular, wherein the controller further comprises a comparator coupled to the timing circuit, the comparator is configured to compare the duration of voltage transitions with a predefined threshold.
